# EUROPEAN PATENT APPLICATION

(11) **EP 3 291 393 A1**
(43) Date of publication of application: **07.03.2018**
(21) Application number: 17164453.7
(22) Date of filing: 03.04.2017
(51) Int. Cl.: H02G 3/06, F21V 23/00

(54) **STRAIN RELIEF**

(30) Priority: 30.08.2016 FI U20164174 U
(71) Applicant: Helvar Oy Ab, 02150 Espoo (FI)
(72) Inventor: Vuorinen, Kari, 02150 ESPOO (FI)
(74) Representative: Berggren Oy, Helsinki & Oulu

(57) **Abstract**

A strain relief for an operating device (102) for lighting comprises a bottom part (101) and a cover part (301), which have first and second ends. They comprise aligning formations for attaching said bottom part and cover part to each other so that their first ends essentially align and their second ends essentially align. One or more openings in the first end of the bottom part (101) and/or in the first end of the cover part (301) allow routing electric wires through the strain relief. The bottom part (101) comprises, between the first end and second end of the bottom part, studs (108, 109, 110, 111) directed to the inside of the strain relief for offering meandering routes for electric wires through the strain relief.

## Description

The invention is related to strain reliefs of electronic devices. In particular the invention is related to a strain relief that can be used to protect a ballast, driver, or other operating device for lighting against pulling and twitching of its external wires so that the wires do not unintentionally come loose from connectors in the device. Particularly the invention is related to a strain relief of said kind that can be attached as an add-on part to an operating device for lighting that was manufactured and enclosed in a casing separately.

An operating device for lighting is an electronic device that receives an operating voltage from the mains of a building or other structure and that outputs a suitably regulated voltage and/or current for a light source such as a fluorescent tube, light-emitting diode, or a combination of a multitude of these. Operating devices for fluorescent tubes are frequently called ballasts, and those for LEDs (light-emitting diodes) are called LED drivers or driver devices for LEDs. In a completed installation the operating device of lighting may be located inside a luminaire or lighting fixture, or it can be placed independently for example inside a suspended ceiling.

A general feature of operating devices for lighting is their division into linear and compact devices based on their outer appearance. Linear operating devices have a clearly elongated form. Their width may be only some tens of millimetres, like 30 or 35 mm, and their height may be even less, like 15-20 mm. The length of a linear operating device is measured in hundreds of millimetres and is generally between 200 and 400 mm. The relations of these dimensions represent an established practice on the field and they originate from the ballasts made for luminaires using fluorescent tubes: the width and height of the ballasts had to be small for easy fitting inside the luminaires that were generally elongated in form. The length and width of a compact operating device are much closer to each other than in a linear one: the dimensions of a compact operating device may be for example in the order of 100 x 70 x 25 mm. Many manufacturers use sheet metal, typically a steel alloy, as the casing material of linear operating devices, while the casing of a compact type operating device is almost without exception made of plastic.

National and international regulations concerning electric safety may comprise even rather elaborate requirements concerning the protection of electric devices against pulling forces on their external wires. In an operating device for lighting such external wiring may include incoming wires that bring the operating voltage to the device, as well as outgoing wires for conducting the regulated output voltage and current to the light source(s). Additionally there may be incoming and/or outgoing communication lines, sensor wires, antennas, and the like. Typically at least the incoming mains power lines must be equipped with a strain relief. On the other hand an operating device installed inside a luminaire may come completely without any strain relief, because a similar function is already implemented at the outer perimeter of the luminaire. Because the manufacturers of operating devices may want to keep the number of different product versions within reasonable limits, and also because the total volume of an operating device to be installed inside a luminaire should not be increased with any unnecessary strain relief structures, it has become customary to provide an attachable and detachable separate strain relief part that is only used when needed. An external, snap-on type strain relief part for a compact device is known for example from EP2413433.

Problems of known strain reliefs often involve a somewhat slow procedure of installing the wires, a long sequence of required steps, and/or the need to use both hands. It is possible that the operating device with its strain relief must be installed in a location where access and manual installing operations are difficult. Large lighting systems may require installing and wiring dozens, hundreds, or even thousands of operating devices. The structure of the strain relief may have significant implications on the safety and comfort of installing personnel and the consumption of working time.

An objective of the invention is to provide a strain relief the installing and wiring of which is quick and easy, and most advantageously possible to do even with only one hand. Another objective of the invention is that the strain relief accepts and works effectively with a wide variety of wire gauges and types. Yet another objective is that the strain relief has advantageously low manufacturing costs. Yet another objective of the invention is that the strain relief is particularly applicable as an add-on part to linear operating devices for lighting.

The objectives of the invention are achieved with a strain relief that has a bottom part and a cover part, and in which the wires can be bent to follow meandering routes between a first end and a second end of the strain relief.

A strain relief according to the invention is characterised by the features recited in the characterising part of the appended independent claim directed to a strain relief. Advantageous embodiments of the invention are described in the depending claims.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.
- Figure 1: shows a top view of: a bottom part of a strain relief and an end of an operating device,
- figure 2: shows a side view of: the bottom part of the strain relief and the end of the operating device,
- figure 3: shows an end view of: a bottom part and cover part of a strain relief,
- figure 4: shows a side view and another end view of: a bottom part and cover part of a strain relief,
- figure 5: shows a meandering route of a wire through a strain relief,
- figure 6: shows another meandering route of a wire through a strain relief,
- figure 7: shows another meandering route of a wire through a strain relief,
- figure 8: shows another meandering route of a wire through a strain relief, and
- figure 9: shows a side view of: a bottom part and a cover part of a strain relief as well as an end of an operating device.

In this description terms like "wire" and "cable" are used to designate signal-and/or power-conducting members that generally have one or more conducting cores encapsulated in one or more layers of protective insulation. A simple example of a wire is a single-strand electric wire in which the electrically conducting core is made of solid copper and it is surrounded by a polymer sheath. A simple example of a cable is one where two or three electric wires are commonly encapsulated into another polymer sheath. More complicated examples may have multi-stranded cores and/or several cores, and more elaborate shielding arrangements around the cores. The wire or cable may be an optical cable, in which the conducting core is not electrically but optically conductive. For the purposes of the present invention there is little reason to separate between a wire or cable, as long as the entity in question can be attached by an end thereof to an operating device of lighting and needs to be protected against pulling forces. Thus what is said about a wire is equally applicable to a cable and vice versa.

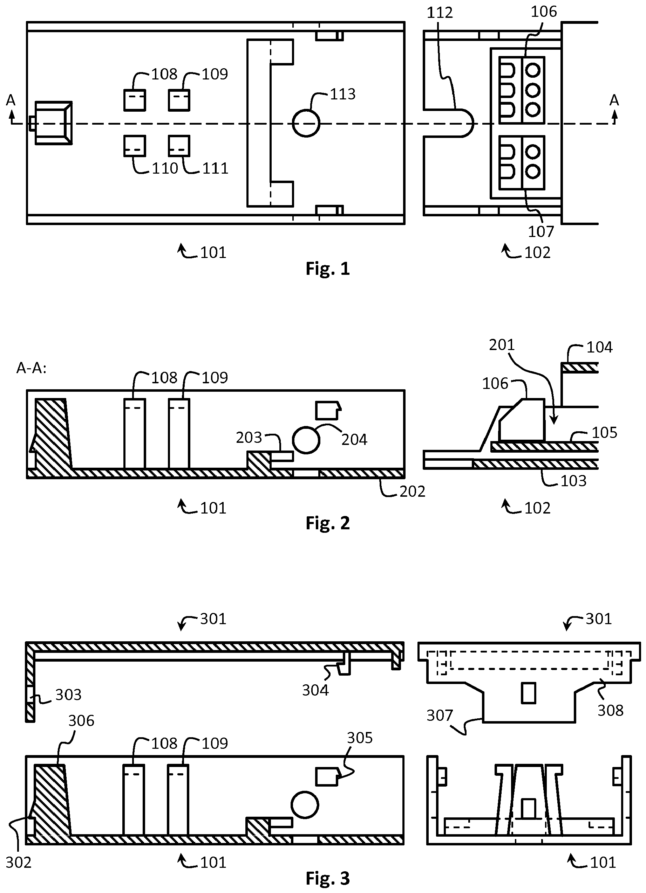

Figures 1 and 2 show a bottom part 101 of a strain relief, as well as a part of an operating device 102 for lighting. Fig. 1 is a top view and fig. 2 is a side view, in particular a transverse cut-out view along the line A-A in fig. 1. The operating device 102, a part of which is shown in figs. 1 and 2, may be for example a linear operating device, so that at an end thereof there is seen the bottom 103 and cover 104 of a sheet metal casing, as well as a printed circuit board 105 with one or more connectors attached to it. As an example, fig. 1 shows connectors 106 and 107, of which connector 106 is also visible from the side in fig. 2. It is typical to operating devices for lighting that connectors must be accessible in both horizontal and vertical directions: horizontal in order to push an electric wire into place in the connector and vertical in order to push or twist a release pin when the electric wire needs to be detached. Therefore the cover 104 of the casing usually does not extend over the connectors but leaves them clearly visible. In some cases the operating device may have a distinct opening, notch, or cleft 201 behind the connectors.

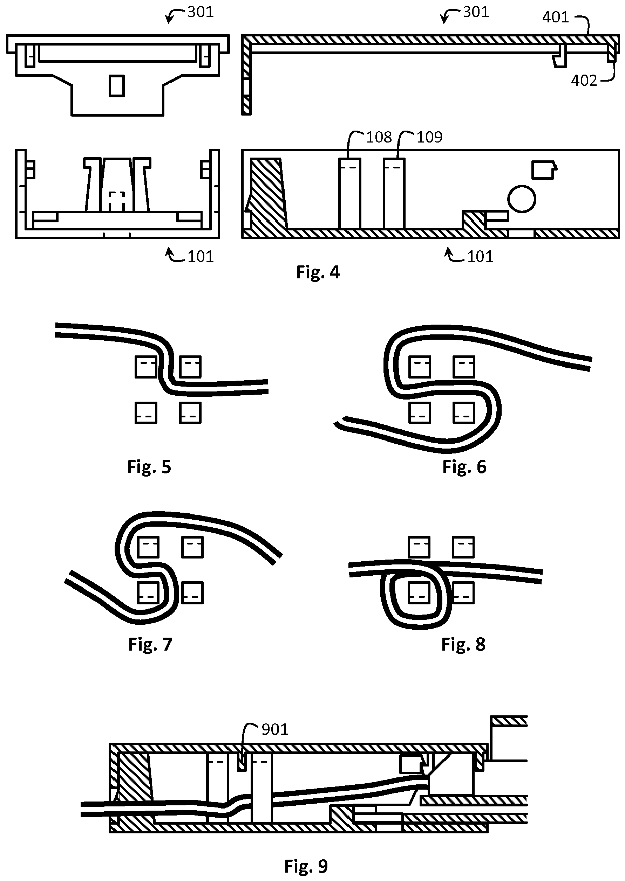

Figs. 3 and 4 show the same bottom part 101 of a strain relief as in figs. 1 and 2. Additionally figs. 3 and 4 show a cover part 301 of the strain relief. For reasons of graphical clarity the cover part 301 is shown suspended above the bottom part 101, as if waiting to be attached to the bottom part 101. The left part of fig. 3 shows the bottom part 101 and the cover part 301 in a transverse cut-out view and the right part of fig. 3 shows them in an end view. The right part of fig. 4 shows the bottom part 101 and the cover part 301 in a transverse cut-out view and the left part shows them in an end view from the opposite end compared to fig. 3.

The bottom part 101 and the cover part 301 comprise aligning formations for attaching them to each other. For the ease of installing it is advisable that at least some of said aligning formations are lock-in formations configured to hold the cover part 301 in place against the bottom part 101 after they have been brought together with a pressing or pinching movement. There are numerous ways of implementing lock-in formations in practice. Some examples are shown in the drawings, like the wedge-shaped protrusion 302 and the corresponding opening 303, as well as the claw 304 and the corresponding notch 305. It is typical, but not mandatory, to lock-in formations that they comprise matching edges in the two parts to be attached, said edges being oriented transversely to the direction in which the parts are moved to make the attachment. It is also typical, but not mandatory, that at least one of such edges is in an elastically deformable portion of the respective part, so that it is forced to deform elastically to slide one edge over the other, and the elastic deformation relaxes when the parts come into a close enough contact. Another typical, but not mandatory, feature is that there is an obliquely oriented surface close to at least one of the edges in order to create a wedging force that causes said elastic deformation when the parts approach the final attached position.

Attaching the bottom part 101 and cover part 301 together may be accomplished completely with lock-in formations of the kind above, in which case the assembling procedure is particularly easy and straightforward. However, in some legislations it is mandatory to have a strain relief secured with a screw or other means that require a tool for opening. Thus the invention does not exclude the use of screws or other fasteners that require more complicated user intervention than just squeezing the parts together. One possibility is to have lock-in formations that keep the bottom part and cover part together at one end, and one or more screws close to the other end to keep the parts together at that end.

Both the bottom part 101 and the cover part 301 have a first end and a second end. When they are attached to each other with the help of the aligning formations mentioned above, the first ends essentially align and the second ends essentially align. The naming convention in this description is such that the second ends come next to the exposed end of an operating device, so that wires for which a strain relief is needed come out of the strain relief at its first end in the completely assembled configuration.

The first end of the bottom part 101 and/or the first end of the cover part 301 comprise openings or cut-out portions for routing the electric wires through the strain relief. In the embodiment shown in the drawings there is a relatively thick pole 306 in the middle of the first end of the bottom part 101, so that said openings or cut-out portions in the first end appear between the pole 306 and the side walls of the bottom part 101. In the middle of the first end of the cover part 301 is a tongue 307, with isthmuses 308 connecting its root to the side walls of the cover part 301. Thus the outer edges of the tongue 307 and the isthmuses 308 delimit the openings or cut-out portions in the first end of the cover part 301. The openings or cut-out portions need not be symmetrical with respect to the middle plane of the strain relief, even if they are in the drawings. In case the strain relief should be resistant to liquid splashes and/or dust, the openings or cut-out portions may be equipped with elastic collars that in the completed structure act as gaskets that seal the otherwise remaining open portions of the openings or cut-out portions. The edges of the openings or cut-out portions may comprise serrated surfaces, V-shaped slits or grooves, or other mechanical features that cause friction to a wire or cable that will pass through the opening or cut-out portion after installation is complete.

The bottom part 101 comprises, between its first end and second end, studs directed to the inside of the strain relief. Their purpose is to offer meandering routes for electric wires through the strain relief. Figs. 1 to 4 show, as examples, studs 108, 109, 110, and 111. The studs may be located in the bottom part 101 at at least two distances between the first end and the second end. In figs. 1 to 4 there are studs at two distances: studs 108 and 110 at the first distance and studs 109 and 111 at the second distance between the first and second ends.

The location, number, and cross section of the studs have significant effects on what kind of meandering routes they offer to electric wires and how much friction is caused by the meandering, i.e. how effectively the strain relief acts against a pulling force on the wires. Naturally also the thickness and stiffness of the wires have some effect. It is advantageous if at least some of the studs have a sharp-cornered cross section for increasing resistance to sliding between the studs and the electric wires. The corners of such a stud bite into the (typically elastic) insulation layer on the surface of the wire when the wire is pulled, which keeps the wire from moving in its longitudinal direction despite the pulling. One advantageous sharp-edged cross section, which also combines well the aims of both structural stiffness and savings in manufacturing material, is a plus sign (+) or other branching shape such as X, Y, or N.

The free ends of the studs may be specifically formed to keep the wires from slipping free around the free ends of the studs. As an example in figs. 1 to 4 each of the studs 108, 109, 110, and 111 tapers slightly towards its free end, while just at the end there is a wider portion or transverse flange.

Figs. 5, 6, 7, and 8 show some examples of meandering routes that an electric wire may take through that portion of the strain relief that comprises studs like those described above. Fig. 5 shows an S-shaped bend of an electric wire around two successive studs at different distances. Fig. 6 shows an S-shaped bend of an electric wire around two studs that are at different distances but not in the same line. Fig. 7 shows an S-shaped bend of an electric wire around two studs that are next to each other at the same distance. Fig. 8 shows a round of an electric wire encircling a single stud.

All these drawings assume that there are a total of four studs and that they are symmetrically located at two distances. This placing of the studs and these routes of the electric wires are only examples: there may be fewer or more studs, and the studs may be located at just one distance or at three or more distances. The invention does not require there to be an equal number of studs at every distance or that the studs should be located at regular intervals in any direction. The minimum number of studs is one, in which case the meandering route of an electric wire may consist e.g. of a loop around the single stud, like in fig. 8 (which nevertheless comprises a total of four studs, three of which are not used for the illustrated meandering route). However, there are several reasons that advocate providing at least two studs and placing the studs at at least two distances. If there are at least two studs, one stud getting bent or damaged does not necessarily mean that the whole strain relief would become unusable. A larger number of studs also offers a larger number of different meandering routes, which is advantageous if there are two or more electric wires going through the strain relief, because not all wires need to occupy exactly the same space and because the loads caused by any pulling forces can be distributed more easily into the structures of the strain relief. Placing several studs at various separations between them and between a stud and a side wall or other neighboring portion of the bottom part may also enhance the usability of the strain relief for electric wires of different thicknesses or wires that have otherwise different characteristics.

If the studs are close enough to the first end of the bottom part, it is also possible to make a meandering route for a wire so that one or more studs stand on such a longitudinal axis of the bottom part that also passes through an opening in the first end. Thus a wire or cable that passes through the opening cannot continue along a rectilinear path inside the strain relief but must make a bend around the stud or studs that stand on its way.

As such the invention does not exclude placing the studs in the cover part and not in the bottom part. However, this has little significance to the invention, because the designations "cover part" and "bottom part" are more or less arbitrary, and one may always select their meanings so that a bottom part is one that at least has studs.

Repeated twitching may be more difficult to tackle with a strain relief than constant pulling, because repeatedly removing the pulling force on the wires may cause them to move around the studs and also in the longitudinal direction of the studs, and little by little a wire might make it to jumping out of its meandering route even if the free ends of the studs had flanges. Such a problem can in many cases be avoided by providing in the cover part a mating formation for limiting the space between the free ends of the studs and the cover part when the cover part is attached to the bottom part. For best efficiency the mating formation should be at essentially the same distance between the first and second ends of the bottom and cover parts as at least a portion of the studs, or at least sufficiently close to the free ends of the studs so that the deforming ability of the wires do not mitigate the effect of the mating formation.

In a very simple case the mating formation may be just some portion of the cover part that is located essentially at the same distance as the studs and that comes sufficiently close to the free ends of the studs in the assembled configuration. This kind of a case can be created by making the studs long enough so that in the assembled configuration they reach (at least almost) the inner surface of the cover part. The mating formation can also be a protruding portion that comes between at least two of the studs in the bottom part when the cover part is attached to the body part. Such a protruding portion 901 is shown in fig. 9, which shows the assembled configuration in a transverse cut-out view.

Fig. 9 shows an exemplary embodiment of a strain relief assembled and attached to an operating device for lighting. Similar parts and details are also shown in figs. 2, 3, and 4, where the use of reference designators is easier without clogging up the drawing. The second end of the bottom part 101 comprises a bottom plate 202 as well as one or more protrusions 203 parallel with the bottom plate 202 for receiving an end of an operating device 102 for lighting between said bottom plate 202 and said one or more protrusions 203. In the illustrated embodiment the corners of the bottom of the sheet metal casing 103 come between the bottom plate 202 and protrusions 203 in the bottom part of the strain relief. Similar protrusions could appear in the side walls of the bottom part 101, so that they would lock into the ends of the side walls of the sheet metal casing. The second end of the cover part 301 comprises a cover plate 401 and one or more protrusions 402 directed from the cover plate 401 to the inside of the strain relief, for locking into an opening, notch, or cleft 201 in an operating device 102 for lighting attached to the strain relief. In the embodiment shown in the drawings there is utilized the cleft 201 that is left behind the connectors 106 and 107, between them and the edge of the cover 104 of the sheet metal casing. If the cover part 301 of the strain relief comprises side walls that reach to the side walls of the metal casing, also there could be some kind of lock-in-, aligning-, or support formations.

It is quite typical that the end of a linear operating device for lighting comprises a notch or a hole for an attachment bolt. An example of such a notch is shown with the reference designator 112 in fig. 1. The strain relief may have one or more attachment holes for receiving a common fastener through such an attachment hole and a corresponding attachment hole in the attached operating device for lighting. Fig. 1 shows such an attachment hole 113 in the bottom part 101. Placing the attachment hole in particular to the bottom part involves an advantage, because the intended procedure of assembling the system comprises attaching the bottom part to the operating device for lighting, attaching and routing the wires, placing the combination of bottom part and operating device for lighting into its final location and possibly fastening it there, and finally snapping the cover part of the strain relief into place. The steps of placing and routing the wires and placing the combination of bottom part and operating device for lighting into its final location and possibly fastening it there can be executed in any order. Even if the strain-relief-equipped operating device for lighting is not meant to be fastened anywhere, it may be advisable to increase the structural integrity of the joint between the strain relief and the operating device for lighting by placing a nut-and-bolt pair or other fastening means through the pair of mutually corresponding attachment holes in the two. An operating device for lighting may be also configured for attachment by its side surface, so also the strain relief may have one or more attachment holes in a side surface thereof, like attachment hole 204 in fig. 2.

Considering the assembling procedure described above it is advantageous if the bottom part has a U-shaped cross section and is open on that entire side on which the cover part is arranged to be attached. This way the bottom part allows routing the electric wires into place to the bottom part without passing them through any encircled hole in the bottom part, which makes installing fast and safe. The installing can be made even with only one hand, which is advantageous if the location is one where the installing person should have the other hand reserved for support. In this case the openings or cut-out portions in the first end of the bottom part, through which openings or cut-out portions the electric wires come out of the strain relief after installing, are shaped like U, L, or J, and open towards that side on which the cover part will be attached. An alternative embodiment is one where the bottom part comprises a transverse wall in its first end, as well as one or more encircled holes in said transverse wall for passing electric wires through said one or more encircled holes. Even if the installing phase may require slightly more time and accuracy than just routing the wires in place in an U-shaped bottom part, the encircled holes may bring about some other advantages for example in those cases where the strain relief must resist dust and/or splashes of liquid.

From the manufacturing viewpoint it is advantageous to make the strain relief of as few separate parts as possible, and so that the manufacturing of said parts requires as few steps and as little material as possible. The bottom part is most advantageously a single integral part made of an electrically insulating material, like a polymer. Suitable manufacturing methods are all known manufacturing methods of plastic parts, including but not being limited to injection moulding, rotational moulding, casting, and 3D printing. The cover part can also be made as a single integral part of similar materials and with similar methods. One advantageous possibility is to manufacture the bottom part and the cover part together as an integral piece, in which a relatively narrow isthmus connects the two. If the material is yielding enough, the cover part may then be twisted into place over the bottom part by bending the isthmus. Alternatively the installing person may cut the isthmus only when it comes to actually installing the strain relief. One of the advantages of such a method is that the installing person does not need to separately worry about carrying the appropriate number of bottom parts and cover parts with him or her, because there are automatically an equal number of both.

Variations and modifications of the embodiments described above are possible without parting from the scope of protection defined by the appended claims. For example, it is perfectly possible to make the strain relief comprise more than two parts, a non-limiting example of an additional part being a wedge part placed between the bottom and cover parts so that in the assembled configuration these cause the wedge part to be squeezed between a wire or cable and some portion of the bottom and/or cover parts. Additionally it is not mandatory that the operating device of lighting, to which the strain relief will be attached, is of the linear type, although it brings about advantages: the described way of attaching the strain relief makes use of the typical arrangement of connectors and features of the sheet metal cover at an end of a linear operating device for lighting. Taken the common appearance of such features the strain relief according to the invention can be readily attached to many existing linear operating devices for lighting without modifying them in any way.

## Claims

1. A strain relief configured for attachment to an operating device (102) for lighting, the strain relief comprising:
- a bottom part (101), which has a first end and a second end, and a cover part (301), which has a first end and a second end, said bottom part (101) and cover part (301) comprising aligning formations for attaching said bottom part and cover part to each other so that their first ends essentially align and their second ends essentially align, and
- in the first end of the bottom part (101) and/or in the first end of the cover part (301) one or more openings for routing electric wires through the strain relief,
**characterised in that**
- the bottom part (101) comprises, between the first end and second end of the bottom part, studs (108, 109, 110, 111) directed to the inside of the strain relief for offering meandering routes for electric wires through the strain relief.

2. A strain relief according to claim 1, **characterised in that** said bottom part (101) comprises said studs (108, 109, 110, 111) at at least two distances between the first end and the second end.

3. A strain relief according to claim 1 or 2, **characterised in that** the second end of the bottom part (101) comprises a bottom plate (202) as well as one or more protrusions (203) parallel with the bottom plate (202) for receiving an end of an operating device (102) for lighting between said bottom plate (202) and said one or more protrusions (203).

4. A strain relief according to one of the preceding claims, **characterised in that** the bottom part (101) comprises one or more attachment holes (113, 204) for receiving a common fastener through such an attachment hole (113, 204) in the bottom part and a corresponding attachment hole (112) in an attached operating device (102) for lighting.

5. A strain relief according to one of the preceding claims, **characterised in that** the second end of the cover part (301) comprises a cover plate (401) and one or more protrusions (402) directed from the cover plate (401) to the inside of the strain relief, for locking into an opening, notch, or cleft (201) in an operating device (102) for lighting attached to the strain relief.

6. A strain relief according to any of the preceding claims, **characterised in that** the cover part (301) comprises, at essentially the same distance between the first and second ends as at least a portion of said studs (108, 109, 110, 111) in the bottom part, a mating formation (901) for limiting free space between the free ends of said studs (108, 109, 110, 111) and the cover part (301) when the cover part is attached to the bottom part.

7. A strain relief according to claim 6, **characterised in that** said mating formation (901) is a protruding portion that comes between at least two of said studs (108, 109, 110, 111) in the bottom part when the cover part is attached to the bottom part.

8. A strain relief according to any of the preceding claims, **characterised in that** at least some of said studs (108, 109, 110, 111) have a sharp-cornered cross section for increasing resistance to sliding between the studs (108, 109, 110, 111) and the electric wires.

9. A strain relief according to any of the preceding claims, **characterised in that** the bottom part (101) has a U-shaped cross section and is open on that entire side on which the cover part (301) is arranged to be attached, so that the bottom part (101) allows routing the electric wires into place to the bottom part (101) without passing them through any encircled hole in the bottom part (101).

10. A strain relief according to any of claims 1 to 8, **characterised in that** the bottom part (101) comprises a transverse wall in its first end, as well as one or more encircled holes in said transverse wall for passing electric wires through said one or more encircled holes.
